# EUROPEAN PATENT SPECIFICATION

(11) **EP 2 246 850 B1**
(45) Date of publication and mention of the grant of the patent: **12.12.2012**
(21) Application number: 09705040.5
(22) Date of filing: 30.01.2009
(51) Int. Cl.: G11B 19/12, G11B 20/10, G11B 20/00

(54) **METHOD FOR DISCRIMINATING OPTICAL DISC, OPTICAL DISC DEVICE AND PROGRAM**
VERFAHREN ZUR ERKENNUNG EINER OPTISCHEN SCHEIBE, OPTISCHE SCHEIBENVORRICHTUNG UND PROGRAMM DAFÜR
PROCÉDÉ DE RECONNAISSANCE DE DISQUE OPTIQUE, DISPOSITIF À DISQUE OPTIQUE, ET LOGICIEL

(30) Priority: 31.01.2008 JP 2008021171; 31.01.2008 JP 2008021176; 31.01.2008 JP 2008021185
(43) Date of publication of application: 03.11.2010
(73) Proprietor: JVC KENWOOD Corporation, Kanagawa 221-0022 (JP)
(72) Inventor: FUKUMOTO, Akihiro, Machida-shi Tokyo 194-0212 (JP); ARAI, Tsutomu, Hachiouji-shi Tokyo 192-0904 (JP)
(74) Representative: Leinweber & Zimmermann
(86) International application number: PCT/JP2009/051549
(87) International publication number: WO 2009/096510

(56) References cited:
- EP-A1- 1 953 753
- WO-A1-2007/114044
- WO-A1-2007/141845
- WO-A1-2008/129450
- JP-A- 2000 023 089
- JP-A- 2001 189 049
- JP-A- 2002 050 054
- JP-A- 2006 107 581
- JP-A- 2008 186 530
- JP-B2- 4 156 019
- US-A1- 2005 154 682

## Description

### TECHNICAL FIELD

The present invention relates to a method for discriminating optical discs, and an optical disc device and a program for realizing the discriminating method.

### BACKGROUND ART

With various standards already created for DVD (Digital Versatile Disc), an optical disc format, new standards are still set in accordance with new varieties of DVD. For this reason, the types of DVD need to be discriminated when a DVD is loaded into an optical disc device. As techniques for discriminating the types of DVD, proposals disclosed in the patent documents below are known.
Patent Document 1: Japanese Patent Application Laid-Open No. 2004-246990
Patent Document 2: Japanese Patent Application Laid-Open No. 2000-315355

According to US 2005/154682 A1, an authoring device recognizes by checking a DVD for special media indication whether the media is in fact specialized media on which content can be written.

### DISCLOSURE OF THE INVENTION

### PROBLEMS TO BE SOLVED BY THE INVENTION

DVD Download standards are proposed as new standards of DVD. The DVD Download standards are based on the assumptions that a service provider or the like authorized by a content supplier records content on DVDs and supplies them to consumers, or that a provider authorized by a content supplier burns or otherwise writes content onto a DVD blank disc purchased by a user, instead of the assumption that a content supplier provides DVDs for consumers.

The DVD Download standards involve a standard (standard of EST2) stipulating that control signals for protecting copyright such as for preventing illegal copy and for preventing illegal reproduction of content must be recorded in the control data zone (an area for recording control information; almost synonymous with an after-mentioned lead-in zone) of a DVD in advance.

Specifically, in the control data zone, four items of information below are written:
1) Book Type
2) Compatible Part Version
3) Disc Indicator
4) Maximum Recorded Address

If DVD-ROM is written in Book Type in the control data zone, it is logically recognized that the disc is a DVD-ROM and it is assumed that there is data recorded in the data zone.

Accordingly, if a blank disc, which has no data recorded in the data zone, is loaded in an optical disc reproducing device, the optical disc reproducing device reads the information from the control data zone and logically recognizes that the blank disc is a DVD-ROM based on the entry for Book Type. Then, the optical disc reproducing device seeks the data zone and proceeds to read processing on data assumed to be recorded therein.

The optical disc reproducing device cannot read any data when it proceeds to the reading operation, however, because the blank disc has no data recorded in the data zone. It may cause the optical disc reproducing device to run into an infinite loop in which a data-reading operation continues infinitely. Or, it may cause a data processing device side to have such malfunctions as mistaking the absence of data to be read for the occurrence of a failure.

The present invention solves the above-mentioned problems and has an object of easily discriminating that a disc is a blank disc that conforms to the DVD Download standards with no data to be read in the data zone.

### MEANS FOR SOLVING THE PROBLEMS

According to the invention, the above object is achieved by the optical disc discriminating method according to claim 1, the optical disc device according to claim 5, the program according to claim 9 and the optical disc device according to claim 12. Preferred embodiments are claimed in the subclaims.

In other words,
according to the first aspect of the present invention, the present invention is an optical disc discriminating method for discriminating types of loaded optical disc, characterized by judging that the optical disc is a blank disc that conforms to DVD Download standards when it is logically detected that the optical disc is a DVD-ROM based on disc information written in a lead-in zone of the optical disc and it is also detected that there is no data recorded in a data zone of the optical disc.

When a tracking error signal with a predetermined or greater amplitude is not detected in the data zone, it can be judged that there is no data recorded in the data zone.

When it is controlled to perform tracking-on on the data zone but the tracking-on fails, it can be judged that there is no data recorded in the data zone.

The logical detection of being a DVD-ROM can be performed based on Book Type written in the control data zone in the lead-in zone of the optical disc.

According to the second aspect of the present invention, the present invention is an optical disc device for recording and/or reproducing information in a loaded optical disc, characterized by comprising: a first identification means which logically identifies that the optical disc is a DVD-ROM based on information written in a lead-in zone of the optical disc; a second identification means which identifies that there is no data recorded in a data zone of the optical disc; and a discrimination means which judges that the optical disc is a blank disc that conforms to DVD Download standards, based on output from the first identification means indicating that the optical disc is logically a DVD-ROM and output from the second identification means indicating that there is no data recorded in the data zone.

When a tracking error signal with a predetermined or greater amplitude cannot be detected, the second identification means can judge that there is no data recorded in the data zone.

When it is controlled to perform tracking-on on the data zone but the tracking-on fails, the second identification means can judge that there is no data recorded in the data zone.

The logical identification of being a DVD-ROM can be performed based on Book Type written in the control data zone in the lead-in zone of the optical disc.

According to the third aspect of the present invention, the present invention is a program for causing an information processing device to realize functions of the first identification means, the second identification means, and the discrimination means when the program is installed in the information processing device.

According to the fourth aspect of the present invention, the present invention is an optical disc discriminating method for discriminating types of loaded optical disc, characterized by judging that an optical disc is a blank disc that conforms to DVD Download standards when it is logically detected that the optical disc is a DVD-ROM based on disc information written in a lead-in zone of the optical disc, and also determined that tracking-on fails as a result of performing a tracking operation instruction on a data zone of the optical disc, and also determined that no tracking error signal is detected as a result of performing focus-on on the data zone.

Among areas in the data zone of the optical disc, a start address area therein can be subjected to the focus-on.

The tracking operation can be performed while moving in the radial direction of the optical disc.

According to the fifth aspect of the present invention, the present invention is an optical disc device for recording and/or reproducing information in a loaded optical disc, characterized by comprising: a first identification means which logically identifies that the optical disc is a DVD-ROM based on disc information written in a lead-in zone of the optical disc; a tracking control means which controls to perform tracking-on on a data zone of the optical disc, and, if it is determined that the tracking-on fails, outputs an indication that the tracking-on fails; a second identification means which judges whether it is with or without a tracking error signal by performing focus-on on the data zone of the optical disc in response to the output that the tracking-on fails from the tracking control means; and a discrimination means which judges that the optical disc is a blank disc that conforms to the DVD Download standards, based on an output from the first identification means logically indicating that the optical disc is a DVD-ROM and the output from the second identification means indicating absence of the tracking error signal.

Among areas in the data zone of the optical disc, a start address area therein can be subjected to the focus-on.

The tracking control means can control to perform the tracking-on on the optical disc while moving in the radial direction thereof.

According to the sixth aspect of the present invention, the present invention is an optical disc discriminating method for discriminating types of loaded optical disc, characterized by judging that the optical disc is a blank disc that conforms to DVD Download standards, if it is logically detected that the optical disc is a DVD-ROM based on information written in a lead-in zone of the optical disc and no tracking error signal is detected in the data zone, followed by detecting a wobble signal, and if it is also recognized that a wobble groove is present in the optical disc.

If no tracking error signal is detected in the data zone by a differential phase detection method, a push-pull detection approach can be applied for detecting a wobble signal.

According to the seventh aspect of the present invention, the present invention is an optical disc device for recording and/or reproducing information in a loaded optical disc, characterized by comprising: a first identification means which logically identifies that the optical disc is a DVD-ROM based on information written in a lead-in zone of the optical disc; a second identification means which detects a tracking error signal in a data zone of the optical disc by the differential phase detection method when the first identification means logically identifies that the optical disc is the DVD-ROM; a third identification means which detects a wobble signal in the data zone by the push-pull detection approach when the second identification means detects no tracking error signal; and a discrimination means which discriminates that the optical disc is a blank disc that conforms to the DVD Download standards when the third identification means detects the wobble signal.

### EFFECTS OF THE INVENTION

According to the present invention, a blank disc that conforms to DVD Download standards can be easily discriminated from others, thereby preventing malfunctions.

### BRIEF DESCRIPTION OF THE DRAWINGS

FIG. 1 is a diagram showing a partial configuration of an optical disc device according to a first embodiment of the present invention;
FIG. 2 is a flowchart showing the process of the first embodiment of the present invention;
FIG. 3 is a diagram showing a partial configuration of an optical disc device according to a second embodiment of the present invention;
FIG. 4 is a flowchart showing the process of the second embodiment of the present invention;
FIG. 5 is a diagram showing a partial configuration of an optical disc device according to a third embodiment of the present invention; and
FIG. 6 is a flowchart showing the process of the third embodiment of the present invention.

### DESCRIPTION OF SYMBOLS

1 DVD
2 motor
3 optical pickup
4 signal processing/servo control unit (first identification means, second identification means)
5 disc discrimination unit (disc discrimination means)

### BEST MODES FOR CARRYING OUT THE INVENTION

Embodiments of the present invention will be described below with reference to the drawings.

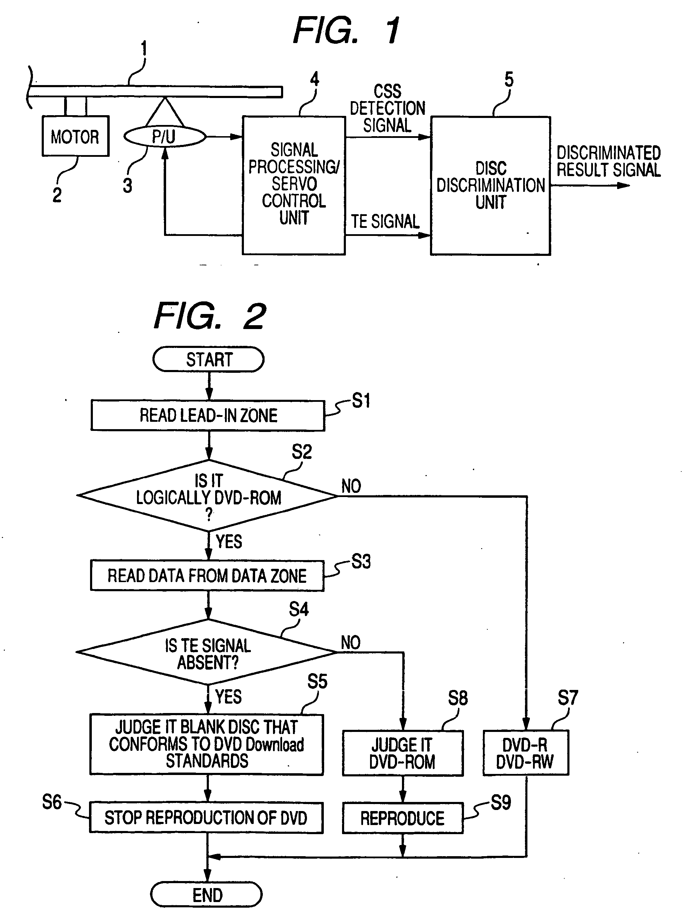

FIG. 1 shows a partial configuration of an optical disc device according to a first embodiment. This optical disc device exemplifies a reproducing device that reads data recorded on a loaded DVD 1 via an optical pickup (denoted by P/U in FIG. 1) 3 by rotating the DVD 1 with a motor 2.

The optical pickup 3 is connected to a signal processing/servo control unit 4 which processes a signal read and servo controls the optical pickup 3 based on the processed signal. The signal processing/servo control unit 4 has a signal processing function of processing the signal read via the optical pickup 3 and outputting the processed result, and a servo controlling function of servo controlling the optical pickup 3 with respect to focusing and tracking based on the signals read. The signal processing function includes functions of processing signals read from a lead-in zone and a data zone and outputting the processed results, such as functions of detecting/outputting Book Type information, detecting/outputting other control signals, and detecting/outputting a tracking error signal. The signal processing/servo control unit 4 has functions of RF front-end and a digital signal processing, and servo controlling functions of providing servo control signals for a focus servo actuator and a tracking servo actuator of the optical pickup 3.

The signal processing/servo control unit 4 corresponds to a first identification means and a second identification means by an aspect of identifying disc information written in the lead-in zone and an aspect of identifying that no data is recorded in the data zone, respectively.

The disc discrimination unit 5 is means for receiving a disc information detection signal and a TE (tracking error) detection signal output from the signal processing/servo control unit 4, discriminating the types of DVD 1, and outputting the discrimination. If it is judged that the loaded DVD 1 is a blank disc that conforms to the DVD Download standards according to the discrimination output, the optical disc reproducing device can stop the reading operation on the DVD 1 to perform a stop reproduction operation or DVD 1 ejection.

Now, a discrimination method according to the first embodiment of the optical disc will be described with reference to the flowchart shown in FIG. 2.

FIG. 2 is a flowchart showing the process of, after it is discriminated that the loaded optical disc is the DVD 1, judging that the DVD 1 conforms to download standards and is a blank disc with no data written in the data zone.

First, the optical disc device reads the lead-in zone by causing the optical pickup 3 to seek the lead-in zone at the inner circumference side of the DVD 1 in which control data is recorded (step S1). The signal processing/servo control unit 4 discriminates logical disc information by reading Book Type written in the control data zone in the lead-in zone (step S2). If disc information other than DVD-ROM is written in Book Type, such as DVD-R or DVD-RW, it is judged that the optical disc is any of the types of disc (step S7).

On the other hand, when it is detected that Book Type is DVD-ROM, it is logically determined that the DVD 1 is a DVD-ROM; therefore, the optical disc device reads the data from the data zone by moving the optical pickup 3 to the data zone (step S3). For example, since the start address of the data zone is 30000h, reading of the data starts at 30000h. At this moment, the signal processing/servo control unit 4 also discriminates whether it is with or without a tracking error signal by trying to detect the tracking error signal using the DPD (Differential Phase Detection) method (step S4). As a result of the discrimination, if a tracking error signal that exceeds a predetermined amplitude (level) is not detected, the signal processing/servo control unit 4 outputs that the tracking error signal is absent to the disc discrimination unit 5.

When it is detected that Book Type is DVD-ROM in the lead-in zone and no tracking error signal is detected in the data zone, the disc discrimination unit 5 judges that the loaded DVD 1 is a blank disc that conforms to the DVD Download standards (step S5). According to the judgment that it is the blank disc, the optical disc device stops the reproduction operation or performs such processing as ejection (step S6).

On the other hand, if the tracking error signal is detected as a result of the discrimination in step S4, data is recorded in the data zone; therefore, it is judged that the DVD 1 is a DVD-ROM (step S8), and the process proceeds to the reproduction operation (step S9).

When data is recorded in the data zone, the content of the data is recorded in each track as a pit which indicates "1" or "0"; therefore, when the pit is detected, the tracking error signal is generally detected as a saw-tooth waveform with an amplitude fluctuation of a predetermined width, for example an output variation width by several hundreds millivolts. If data is not recorded in the data zone, however, no pit is formed thereon; therefore, only a weak signal can be detected as the tracking error signal. For this reason, if no signal but those at levels where no pit is formed can only be detected as the tracking error signals in a blank disc, the signal processing/servo control unit 4 outputs that no tracking error signal is detected.

The signal processing/servo control unit 4 can also judge that no data is recorded by merely performing a tracking operation instruction (tracking-on) as a method of detecting that no data is recorded in the data zone, and having a result that the tracking-on fails (tracking-off); instead of performing a tracking error signal detection instruction and determining that no tracking error signal is detected based on whether the level of the tracking error signal reaches a predetermined range or not.

Data reading control is performed by performing the tracking servo control and the focus servo control, because it is logically determined that it is the DVD-ROM based on the record of Book Type in the lead-in zone. Since a blank disc has no data recorded, however, no tracking error signal for performing the tracking servo control can be obtained, thereby only the focus servo control is performed which does not make the tracking on (the tracking servo control is not turned on); therefore, it can be judged that no data is in the data zone. This judgment is advantageous in such simplicity that it can be determined based on the behavior of the tracking servo control without comparing the amplitude levels of the tracking error signals.

Although the first embodiment has been described by an example of detecting disc information from the lead-in zone at first, which is followed by detecting whether the data zone is with or without the tracking error signals, the order of the detection may be reversed.

The invention of discriminating that it is a blank disc that conforms to the DVD Download standards based on detection of the disc information in the lead-in zone and whether the data zone is with or without the data record can also be realized by installing a control program in the information processing device. When a control program for realizing a function of identifying disc information in the lead-in zone, a function of identifying whether the data zone is with or without the data record, and a function of discriminating that it is a blank disc that conforms to the DVD Download standards based on both of the identified results is installed as a part of disc discriminating software of the conventional DVD reproducing device, the DVD reproducing machine can discriminate that it is a blank disc that conforms to the DVD Download standards. The control program can be easily installed in the information processing device via a recording medium such as a CD-ROM with the program recorded thereon. Alternatively, the control program can be installed in the information processing device over a network.

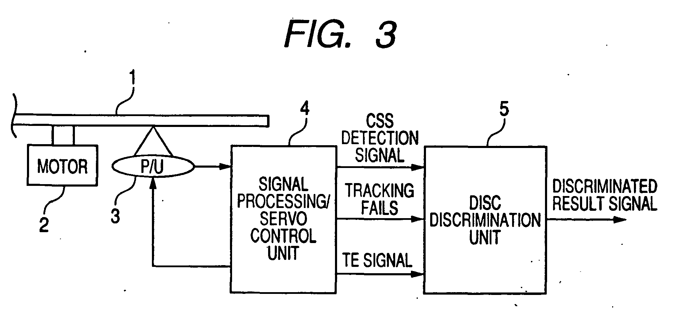

FIG. 3 shows a partial configuration of an optical disc device according to a second embodiment. This optical disc device exemplifies a reproducing device that reads data recorded on the loaded DVD 1 via the optical pickup (denoted by P/U in FIG. 3) 3 by rotating the DVD 1 with the motor 2.

The optical pickup 3 is connected to the signal processing/servo control unit 4 which processes a signal read and servo controls the optical pickup 3 based on the processed signal. The signal processing/servo control unit 4 has a signal processing function of processing the signal read via the optical pickup 3 and outputting the processed result, and a servo controlling function of servo controlling the optical pickup 3 with respect to focusing and tracking based on the signals read. The signal processing/servo control unit 4 has functions of detecting/outputting Book Type information, detecting/outputting other control signals, and detecting/outputting a tracking error signal. The signal processing/servo control unit 4 has functions of RF front-end and a digital signal processing, and servo controlling functions of providing servo control signals for the focus servo actuator and the tracking servo actuator of the optical pickup 3.

The signal processing/servo control unit 4 corresponds to a first identification means, a tracking control means, and a second identification means by an aspect of identifying disc information written in the lead-in zone, an aspect of performing a tracking operation instruction on the optical disc, and, when it results in the tracking failure, outputting that the tracking-on fails, and an aspect of receiving the output that the tracking-on fails and detecting whether the data zone is with or without the tracking error signal by focusing on the data zone, respectively.

The disc discrimination unit 5 is a discrimination means for receiving a disc information detection signal, a signal indicating that the tracking-on fails, and a TE (tracking error) detection signal output from the signal processing/servo control unit 4, discriminating the types of DVD 1, and outputting the discrimination. If it is judged that the loaded DVD 1 is a blank disc that conforms to the DVD Download standards according to the discrimination output, the optical disc reproducing device can stop the reading operation on the DVD 1 to perform the stop reproduction operation or DVD 1 ejection.

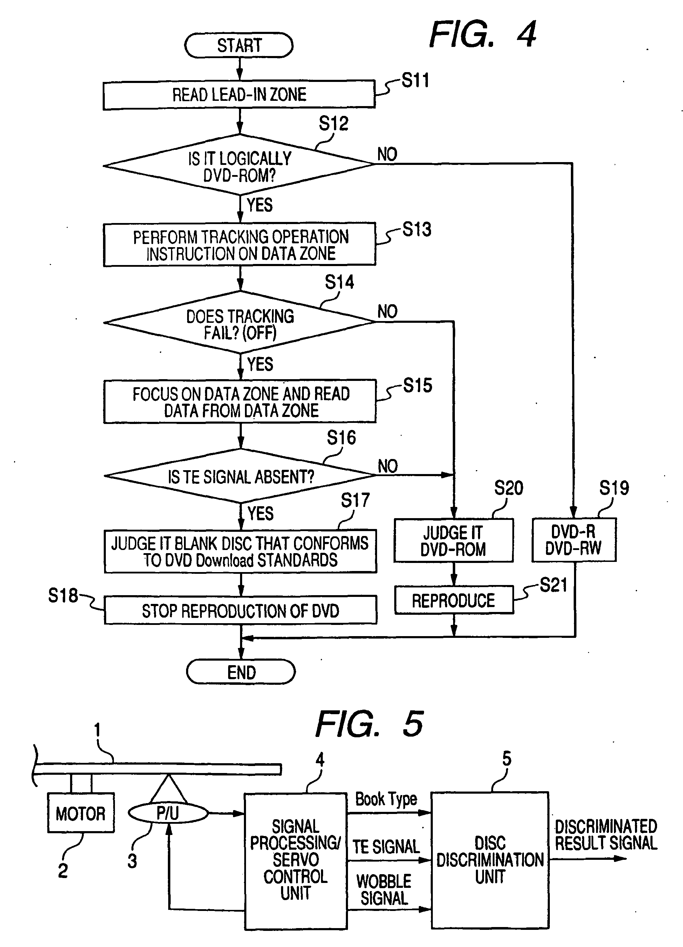

Now, a discrimination method according to the second embodiment of the optical disc will be described with reference to the flowchart shown in FIG. 4.

FIG. 4 is a flowchart showing the process of, after it is discriminated that the loaded optical disc is the DVD 1, judging that the DVD 1 conforms to DVD Download standards and is a blank disc with no data written in the data zone.

First, the optical disc device reads the lead-in zone by causing the optical pickup 3 to seek the lead-in zone at the inner circumference side of the DVD 1 in which control data is recorded (step S11). The signal processing/servo control unit 4 discriminates logical disc information by reading Book Type written in the control data zone in the lead-in zone (step S12). If disc information other than DVD-ROM is written in Book Type, such as DVD-R or DVD-RW, it is judged that the optical disc is any of the types of disc (step S19).

On the other hand, when it is detected that Book Type is DVD-ROM, it is logically determined that the DVD 1 is a DVD-ROM; therefore, the signal processing/servo control unit 4 performs the tracking operation instruction by controlling the optical pickup 3 to move to the data zone (step S13). The tracking operation is performed by seeking the optical pickup 3 in the radial direction of the optical disc 1. The signal processing/servo control unit 4 discriminates whether the tracking can be performed or not from the result of the tracking operation instruction (step S14). If it comes out that the tracking-on fails (tracking failure), the signal processing/servo control unit 4 outputs a signal to that effect to the disc discrimination unit 5. The signal processing/servo control unit 4 focuses on a predetermined area of the data zone and reads data from the data zone (step S15). If the predetermined area starts from the start address of the data zone, 30000h, or placed in the outermost circumference track, for example, the focus-on is fixedly addressed; which is advantageous in simplifying control of detecting the tracking error signals.

The signal processing/servo control unit 4 discriminates whether it is with or without a tracking error signal by trying to detect the tracking error signal starting from a predetermined address by using the DPD (Differential Phase Detection) method (step S16). As a result of the discrimination, if a tracking error signal that exceeds a predetermined amplitude (level) is not detected, the signal processing/servo control unit 4 outputs that the tracking error signal is absent to the disc discrimination unit 5.

When it is detected that Book Type is DVD-ROM in the lead-in zone, the tracking fails, and no tracking error signal is detected when a predetermined area of the data zone is focused on, the disc discrimination unit 5 judges that the loaded DVD 1 is a blank disc that conforms to the DVD Download standards (step S17). According to the judgment that the DVD 1 is a blank disc, the optical disc device stops the reproduction operation or performs such processing as ejection (step S18). If the tracking error signal is detected in step S16, or if the tracking-on is performed without resulting in the tracking-off in step S14, data is recorded in the data zone; therefore, it is judged that the DVD 1 is a DVD-ROM (step S20), and the process proceeds to the reproduction operation (step S21).

When data is recorded in the data zone, the content of the data is recorded in each track as a pit which indicates "1" or "0"; therefore, when the pit is detected, the tracking error signal is generally detected as a saw-tooth waveform with an amplitude fluctuation of a predetermined width, for example an output variation width by several hundreds millivolts. If data is not recorded in the data zone, however, no pit is formed thereon; therefore, only a weak signal can be detected as the tracking error signal. For this reason, if no signal but those at levels where no pit is formed can only be detected as the tracking error signals in a blank disc, the signal processing/servo control unit 4 outputs that no tracking error signal is detected.

Since the second embodiment proceeds in the order of: detecting disc information in the lead-in zone; and then, performing the tracking operation instruction (tracking-on) once; and if the tracking-on fails (tracking failure), performing the focus-on on the data zone to detect the tracking error signals, it is advantageous in certainly detecting that data is not recorded in the data zone.

The invention of discriminating that it is a blank disc that conforms to the DVD Download standards by focusing on the data zone to detect the tracking error signals when the disc information is detected in the lead-in zone and the tracking on the data zone fails can also be realized by installing a control program in the information processing device. When a control program for realizing an identification function of identifying disc information in the lead-in zone, a tracking control function of outputting that the tracking fails in response to the tracking operation instruction, a tracking error signal identification function of focusing on a predetermined area of the data zone to detect whether the data zone is with or without the tracking error signal in response to the output that the tracking fails from the tracking control means, and a discrimination function of discriminating that it is a blank disc that conforms to the DVD Download standards based on these outputs is installed as a part of disc discriminating software of the conventional DVD reproducing device, the DVD reproducing machine can discriminate that it is a blank disc that conforms to the DVD Download standards. The control program can be easily installed in the information processing device via a recording medium such as a CD-ROM with the program recorded thereon. Alternatively, the control program can be installed in the information processing device over a network.

FIG. 5 shows a partial configuration of an optical disc device according to a third embodiment. FIG. 5 exemplifies a reproducing device that reads data recorded on the loaded DVD 1 via the optical pickup (denoted by P/U in FIG. 5) 3 by rotating the DVD 1 with the motor 2.

The optical pickup 3 is connected to the signal processing/servo control unit 4 which processes a signal read and servo controls the optical pickup 3 based on the processed signal. The signal processing/servo control unit 4 has a signal processing function of processing the signal read via the optical pickup 3 and outputting the processed result, and a servo controlling function of servo controlling the optical pickup 3 with respect to focusing and tracking based on the signals read. The signal processing function includes functions of processing signals read from a lead-in zone and a data zone and outputting the processed results, such as functions of detecting/outputting a signal detected in the control data to the effect that the disc is logically a DVD-ROM, detecting/outputting other control signals, detecting/outputting a tracking error signal, and detecting/outputting a wobble signal. The signal processing/servo control unit 4 has functions of RF front-end and a digital signal processing, and servo controlling functions of providing servo control signals for a focus servo actuator and a tracking servo actuator of the optical pickup 3.

The signal processing/servo control unit 4 corresponds to a first identification means, a second identification means, and a third identification means by an aspect of identifying the information recorded in the lead-in zone that it is logically a DVD-ROM, by an aspect of detecting the tracking error signal in the data zone by using the differential phase detection method, and by an aspect of detecting the wobble signal by using the push-pull detection approach if no tracking error signal is detected, respectively.

The disc discrimination unit 5 is a discrimination means for receiving a detection signal to the effect that the DVD 1 is logically a DVD-ROM, a TE (tracking error) detection signal, and detection signal to the effect that a wobble groove is present which are output from the signal processing/servo control unit 4, discriminating the types of DVD 1, and outputting the discrimination. If it is judged that the loaded DVD 1 is a blank disc that conforms to the DVD Download standards according to the discrimination output, the optical disc reproducing device can stop the reading operation on the DVD 1 to perform the stop reproduction operation or DVD 1 ejection.

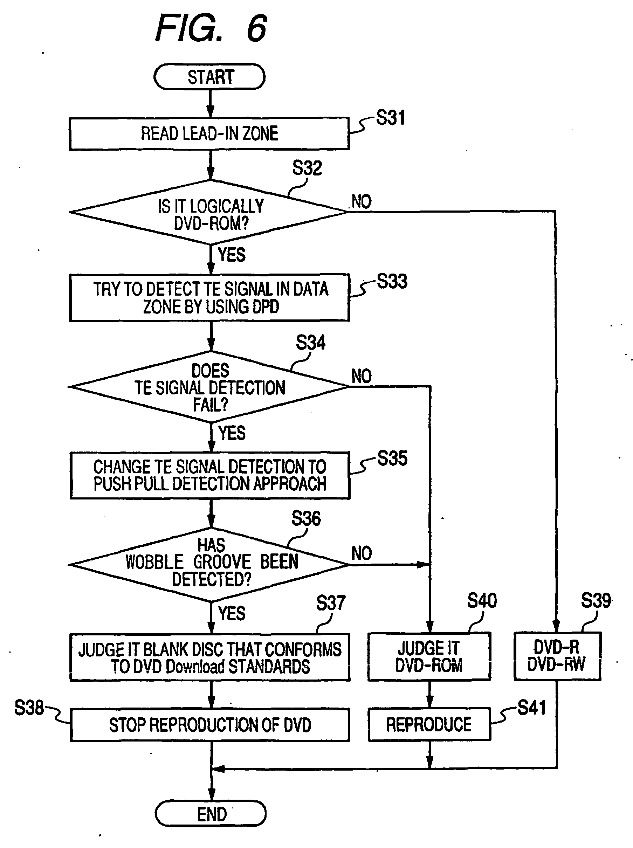

Now, a discrimination method according to the third embodiment of the optical disc will be described with reference to the flowchart shown in FIG. 6.

FIG. 6 is a flowchart showing the process of, after it is discriminated that the loaded optical disc is a DVD, judging that the DVD 1 is a DVD that conforms to DVD Download standards and is a blank disc with no data written in the data zone.

First, the optical disc device reads the lead-in zone by causing the optical pickup 2 to seek the lead-in zone at the inner circumference side of the DVD 1 in which control data is recorded (step S31). It judges whether the information that the optical disc is logically a DVD-ROM is detected in the lead-in zone or not (step S32). Whether the disc is logically a DVD-ROM or not can be determined by whether the information that the disc is a DVD-ROM is loaded as the information on Book Type in the lead-in zone or not.

If disc information other than DVD-ROM is written in Book Type in the lead-in zone of the DVD 1, a test object, such as DVD-R or DVD-RW, it is judged that the optical disc is any of the types of disc (step S39).

According to the discrimination that the DVD 1, the test object, is logically a DVD-ROM, it is determined that the DVD 1 records data as a DVD-ROM; therefore, the optical disc device reads the data in the data zone by moving the optical pickup 3 to the data zone (step S33). For example, since the start address of the data zone is 30000h, reading of the data starts at 30000h. At this moment, the signal processing/servo control unit 4 also tries to detect the tracking error signal (TE signal) by using the DPD (Differential Phase Detection) method, and if a tracking error signal that exceeds a predetermined amplitude (level) is not detected, the signal processing/servo control unit 4 outputs that the tracking error signal is absent to the disc discrimination unit 5 (step S34).

When data is recorded in the data zone, the content of the data is recorded in each track as a pit which indicates "1" or "0"; therefore, when the pit is detected, the tracking error signal is generally detected as a saw-tooth waveform with an amplitude fluctuation of a predetermined width, for example an output variation width by several hundreds millivolts. If data is not recorded in the data zone, however, no pit is formed thereon; therefore, only a weak signal can be detected as the tracking error signal. If no signal but those at levels where no pit is formed can only be detected as the tracking error signals, the signal processing/servo control unit 4 outputs that a tracking error signal is absent.

If signal processing/servo control unit 4 cannot detect the tracking error signal by using DPD, it retries to detect the tracking error after changing the tracking error detection method to the push-pull detection approach, and judges whether a wobble groove is present or not by trying to detect wobble signals in the output from predetermined band path filters (steps S35, S36). In the DVD Download standards, the wobble frequency is defined as about twice the frequency of general DVD-R. Accordingly, the wobble groove can be detected with band path filters for detecting a wobble groove with respect to a conventional DVD-R. On the other hand, there is no wobble groove (wobble frequency) in the DVD-ROM. Therefore, if it is logically determined that the loaded DVD 1 is a DVD-ROM and the wobble groove is detected, the DVD 1 is identified as a blank disc that conforms to the DVD Download standards. If no wobble groove is present, it can be judged as a DVD-ROM.

According to the output to the effect that it is a DVD-ROM, the output to the effect that no tracking error signal is detected, and the output to the effect that the wobble signal is detected, the disc discrimination unit 5 judges that the DVD 1, the test object, is a blank disc that conforms to the DVD Download standards (step S37). According to the judgment that the DVD 1 is the blank disc, the reproduction operation of the disc is stopped or such processing as ejection is performed (step S38). If the tracking error signal is detected or if the wobble signal is not detected, the DVD 1 is judged as a DVD-ROM (step S40), and the process proceeds to the reproduction operation (step S41).

According to the third embodiment, whether the DVD 1 is a blank disc that conforms to the DVD Download standards or not can be certainly discriminated.

When a control program for realizing an identification function of information to the effect that the disc, the test object, is logically a DVD-ROM, an identification function of whether it is with or without the tracking error signal by using DPD, an identification function of whether the wobble groove is present or not, and a discrimination function of discriminating that it is a blank disc that conforms to the DVD Download standards based on the identification results is installed, the DVD reproducing device can discriminate that it is a blank disc that conforms to the DVD Download standards, thereby discriminate as a blank disc that conforms to the DVD Download standards without causing any malfunction. The control program can be easily installed in the information processing device via a recording medium such as a CD-ROM with the program recorded thereon. Alternatively, the control program can be installed in the information processing device over a network.

Although the above-mentioned embodiments have been described by taking example of a DVD reproduction device, the embodiments can also be implemented by a DVD recording device.

## Claims

1. An optical disc discriminating method for discriminating types of loaded optical discs (1), **characterized by**
judging that an optical disc (1) is a blank disc that conforms to DVD Download standards when it is logically detected that the optical disc (1) is a DVD-ROM based on disc information written in a lead-in zone of the optical disc (1), and also determined that tracking-on fails as a result of performing a tracking operation instruction on a data zone of the optical disc (1), and also determined that no tracking error signal is detected as a result of performing focus-on on the data zone.

2. The optical disc discriminating method according to claim 1, **characterized in that** when a tracking error signal with a predetermined or greater amplitude is not detected in the data zone, it can be judged that there is no data recorded in the data zone.

3. The optical disc discriminating method according to claim 1, **characterized in that** when it is controlled to perform tracking-on on the data zone but the tracking-on fails, it can be judged that there is no data recorded in the data zone.

4. The optical disc discriminating method according to any one of claims 1 to 3, **characterized in that** the logical detection of being a DVD-ROM can be performed based on Book Type written in the control data zone in the lead-in zone of the optical disc.

5. An optical disc device for recording and/or reproducing information in a loaded optical disc (1), **characterized by** comprising:
first identification means (4) which logically identifies that the optical disc is a DVD-ROM based on information written in a lead-in zone of the optical disc (1);
second identification means (4) which identifies that there is no data recorded, by reading of data from a data start position in a data zone of the optical disc (1); and
discrimination means (5) which judges that the optical disc (1) is a blank disc that conforms to DVD Download standards, based on output from the first identification means (4) indicating that the optical disc is logically a DVD-ROM and output from the second identification means (4) indicating that there is no data recorded in the data zone.

6. The optical disc device according to claim 5, **characterized in that** when a tracking error signal with a predetermined or greater amplitude cannot be detected, the second identification means (4) can judge that there is no data recorded in the data zone.

7. The optical disc device according to claim 5, **characterized in that** when it is controlled to perform tracking-on on the data zone but the tracking-on fails, the second identification means (4) can judge that there is no data recorded in the data zone.

8. The optical disc device according to any one of claims 5 to 7, **characterized in that** the logical identification of being a DVD-ROM can be performed based on Book Type written in the control data zone in the lead-in zone of the optical disc (1).

9. A program for causing an information processing device to realize functions of the first identification means (4), the second identification means (4), and the discrimination means (5) according to claims 5 to 8, when the program is installed in the information processing device.

10. The optical disc discriminating method according to claim 1, **characterized in that** among areas in the data zone of the optical disc (1), a start address area therein can be subjected to the focus-on.

11. The optical disc discriminating method according to claim 1, **characterized in that** the tracking operation is performed while moving in the radial direction of the optical disc (1).

12. An optical disc device for recording and/or reproducing information in a loaded optical disc (1), **characterized by** comprising:
first identification means (4) which logically identifies that the optical disc is a DVD-ROM based on disc information written in a lead-in zone of the optical disc (1);
tracking control means (4) which controls to perform tracking-on on a data zone of the optical disc (1), and, if it is determined that the tracking-on fails, outputs an indication that the tracking-on fails;
second identification means (4) which judges whether it is with or without a tracking error signal by performing focus-on on the data zone of the optical disc (1) in response to the output that the tracking-on fails from the tracking control means (4); and
discrimination means (5) which judges that the optical disc (1) is a blank disc that conforms to the DVD Download standards, based on an output from the first identification means (4) logically indicating that the optical disc (1) is a DVD-ROM and the output from the second identification means (4) indicating absence of the tracking error signal.

13. The optical disc device according to claim 12, **characterized in that** among areas in the data zone of the optical disc (1), a start address area therein is subjected to the focus-on.

14. The optical disc device according to claim 12, **characterized in that** the tracking control means (4) controls to perform the tracking-on on the optical disc (1) while moving in the radial direction thereof.

15. A program for causing an information processing device to realize functions of the first identification means (4), the tracking control means (4), the second identification means (4), and the discrimination means (5) of the optical disc device according to claim 12 or 13 when the program is installed in the information processing device.

16. The optical disc discriminating method according to claim 1, **characterized by** judging that the optical disc (1) is a blank disc that conforms to DVD Download standards, if no tracking error signal is detected in the data zone, followed by detecting a wobble signal, and if it is also recognized that a wobble groove is present in the optical disc (1).

17. The optical disc discriminating method according to claim 16, **characterized in that**
if no tracking error signal is detected in the data zone by a differential phase detection method, a push-pull detection approach can be applied for detecting a wobble signal.

18. The optical disc device according to claim 12, **characterized by** comprising:
third identification means (4) which detects a wobble signal in the data zone by a push-pull detection approach when the second identification means (4) detects no tracking error signal, and **characterized in that**
the discrimination means (5) discriminates that the optical disc (1) is a blank disc that conforms to the DVD Download standards when the third identification means (4) detects the wobble signal.

19. A program for causing an information processing device to realize functions of the first identification means (4), the second identification means (4), the third identification means (4), and the discrimination means (5) of the optical disc device according to claim 18 when the program is installed in the information processing device.

## Patentansprüche

1. Verfahren zum Erkennen optischer Platten zwecks Erkennung von Arten geladener optischer Platten (1), **gekennzeichnet durch**
Urteilen, dass eine optische Platte (1) eine leere Platte ist, die DVD-Download-Standards entspricht, wenn logisch erfasst wird, dass die optische Platte (1) ein DVD-ROM ist, auf Grundlage von Platteninformationen, die in eine Lead-in- bzw. Vorspannzone der optischen Platte (1) geschrieben sind, und weiterhin festgestellt wird, dass Tracking-on bzw. Auf-Spur-Legen scheitert, als Ergebnis des Durchführens einer Spurverfolgungsvorgangsanweisung auf einer Datenzone der optischen Platte (1), und weiterhin festgestellt wird, dass kein Spurverfolgungsfehlersignal erfasst wird, als Ergebnis des Durchführens einer Fokussierung auf die Datenzone.

2. Verfahren zum Erkennen optischer Platten nach Anspruch 1, **dadurch gekennzeichnet, dass**, wenn ein Spurverfolgungsfehlersignal mit einer vorgegebenen oder einer größeren Amplitude nicht in der Datenzone erfasst wird, geurteilt werden kann, dass keine Daten in der Datenzone aufgezeichnet sind.

3. Verfahren zum Erkennen optischer Platten nach Anspruch 1, **dadurch gekennzeichnet, dass**, wenn Steuerung erfolgt, um Tracking-on bzw. Auf-Spur-Legen auf der Datenzone durchzuführen, aber das Tracking-on bzw. das Auf-Spur-Legen scheitert, geurteilt werden kann, dass keine Daten in der Datenzone aufgezeichnet sind.

4. Verfahren zum Erkennen optischer Platten nach einem der Ansprüche 1 bis 3, **dadurch gekennzeichnet, dass** die logische Erfassung, dass ein DVD-ROM vorliegt, auf Grundlage des Book-Typs durchgeführt werden kann, der in die Steuerdatenzone in der Lead-in- bzw. Vorspannzone der optischen Platte geschrieben ist.

5. Optische Plattenvorrichtung zum Aufzeichnen und/oder Wiedergeben von Informationen in einer geladenen optischen Platte (1), **gekennzeichnet durch** Umfassen:
einer ersten Identifizierungseinrichtung (4), die logisch identifiziert, dass die optische Platte ein DVD-ROM ist, auf Grundlage von Informationen, die in eine Lead-in- bzw. Vorspannzone der optischen Platte (1) geschrieben sind;
einer zweiten Identifizierungseinrichtung (4), die identifiziert, dass keine Daten aufgezeichnet sind, **durch** Lesen von Daten ab einer Datenanfangsposition in einer Datenzone der optischen Platte (1); und
einer Erkennungseinrichtung (5), die urteilt, dass die optische Platte (1) eine leere Platte ist, die DVD-Download-Standards entspricht, auf Grundlage eines Ausgangssignals aus der ersten Identifizierungseinrichtung (4), das anzeigt, dass die optische Platte logisch ein DVD-ROM ist, und eines Ausgangssignals aus der zweiten Identifizierungseinrichtung (4), das anzeigt, dass keine Daten in der Datenzone aufgezeichnet sind.

6. Optische Plattenvorrichtung nach Anspruch 5, **dadurch gekennzeichnet, dass**, wenn ein Spurverfolgungsfehlersignal mit einer vorgegebenen oder einer größeren Amplitude nicht erfasst werden kann, die zweite Identifizierungseinrichtung (4) urteilen kann, dass keine Daten in der Datenzone aufgezeichnet sind.

7. Optische Plattenvorrichtung nach Anspruch 5, **dadurch gekennzeichnet, dass**, wenn Steuerung erfolgt, um Tracking-on bzw. Auf-Spur-Legen auf der Datenzone durchzuführen, aber das Tracking-on bzw. das Auf-Spur-Legen scheitert, die zweite Identifizierungseinrichtung (4) urteilen kann, dass keine Daten in der Datenzone aufgezeichnet sind.

8. Optische Plattenvorrichtung nach einem der Ansprüche 5 bis 7, **dadurch gekennzeichnet, dass** die logische Identifizierung, dass ein DVD-ROM vorliegt, auf Grundlage des Book-Typs durchgeführt werden kann, der in die Steuerdatenzone in der Lead-in- bzw. Vorspannzone der optischen Platte (1) geschrieben ist.

9. Programm zum Veranlassen einer Informationsverarbeitungsvorrichtung, Funktionen der ersten Identifizierungseinrichtung (4), der zweiten Identifizierungseinrichtung (4) und der Erkennungseinrichtung (5) nach Ansprüchen 5 bis 8 auszuführen, wenn das Programm in der Informationsverarbeitungsvorrichtung installiert ist.

10. Verfahren zum Erkennen optischer Platten nach Anspruch 1, **dadurch gekennzeichnet, dass**, unter Bereichen in der Datenzone der optischen Platte (1), auf einen Anfangsadressbereich darin fokussiert werden kann.

11. Verfahren zum Erkennen optischer Platten nach Anspruch 1, **dadurch gekennzeichnet, dass** der Spurverfolgungsvorgang während Bewegung in radialer Richtung der optischen Platte (1) durchgeführt wird.

12. Optische Plattenvorrichtung zum Aufzeichnen und/oder Wiedergeben von Informationen in einer geladenen optischen Platte (1), **gekennzeichnet durch** Umfassen:
einer ersten Identifizierungseinrichtung (4), die logisch identifiziert, dass die optische Platte ein DVD-ROM ist, auf Grundlage von Platteninformationen, die in eine Lead-in- bzw. Vorspannzone der optischen Platte (1) geschrieben sind;
einer Spurverfolgungssteuereinrichtung (4), die steuert, um Tracking-on bzw. Auf-Spur-Legen auf einer Datenzone der optischen Platte (1) durchzuführen, und die, falls festgestellt wird, dass das Tracking-on bzw. das Auf-Spur-Legen scheitert, eine Meldung ausgibt, dass das Tracking-on bzw. das Auf-Spur-Legen scheitert;
einer zweiten Identifizierungseinrichtung (4), die urteilt, ob ein Spurverfolgungsfehlersignal vorhanden ist oder nicht, **durch** Durchführen von Fokussierung auf die Datenzone der optischen Platte (1) in Reaktion auf das Ausgangssignal, dass das Tracking-on bzw. das Auf-Spur-Legen scheitert, aus der Spurverfolgungssteuereinrichtung (4); und
einer Erkennungseinrichtung (5), die urteilt, dass die optische Platte (1) eine leere Platte ist, die den DVD-Download-Standards entspricht, auf Grundlage eines Ausgangssignals aus der ersten Identifizierungseinrichtung (4), das logisch anzeigt, dass die optische Platte (1) ein DVD-ROM ist, und des Ausgangssignals aus der zweiten Identifizierungseinrichtung (4), das das Nichtvorhandensein des Spurverfolgungsfehlersignals anzeigt.

13. Optische Plattenvorrichtung nach Anspruch 12, **dadurch gekennzeichnet, dass**, unter Bereichen in der Datenzone der optischen Platte (1), auf einen Anfangsadressbereich darin fokussiert wird.

14. Optische Plattenvorrichtung nach Anspruch 12, **dadurch gekennzeichnet, dass** die Spurverfolgungssteuereinrichtung (4) steuert, um das Tracking-on bzw. das Auf-Spur-Legen auf der optischen Platte (1) während Bewegung in radialer Richtung derselben durchzuführen.

15. Programm zum Veranlassen einer Informationsverarbeitungsvorrichtung, Funktionen der ersten Identifizierungseinrichtung (4), der Spurverfolgungssteuereinrichtung (4), der zweiten Identifizierungseinrichtung (4) und der Erkennungseinrichtung (5) der optischen Plattenvorrichtung nach Anspruch 12 oder 13 auszuführen, wenn das Programm in der Informationsverarbeitungsvorrichtung installiert ist.

16. Verfahren zum Erkennen optischer Platten nach Anspruch 1, **gekennzeichnet durch** Urteilen, dass die optische Platte (1) eine leere Platte ist, die DVD-Download-Standards entspricht, falls kein Spurverfolgungsfehlersignal in der Datenzone erfasst wird, gefolgt vom Erfassen eines Wobble-Signals, und falls weiterhin festgestellt wird, dass eine Wooble-Groove bzw. -Rille in der optischen Platte (1) vorhanden ist.

17. Verfahren zum Erkennen optischer Platten nach Anspruch 16, **dadurch gekennzeichnet, dass**, falls kein Spurverfolgungsfehlersignal in der Datenzone durch ein Verfahren differentieller Phasendetektion erfasst wird, eine Push-Pull-Detektionsmethode zum Erfassen eines Wobble-Signals angewandt werden kann.

18. Optische Plattenvorrichtung nach Anspruch 12, **gekennzeichnet durch** Umfassen:
einer dritten Identifizierungseinrichtung (4), die ein Wobble-Signal in der Datenzone **durch** eine Push-Pull-Detektionsmethode erfasst, wenn die zweite Identifizierungseinrichtung (4) kein Spurverfolgungsfehlersignal erfasst, und **dadurch** gekennzeichnet, dass
die Erkennungseinrichtung (5) erkennt, dass die optische Platte (1) eine leere Platte ist, die den DVD-Download-Standards entspricht, wenn die dritte Identifizierungseinrichtung (4) das Wobble-Signal erfasst.

19. Programm zum Veranlassen einer Informationsverarbeitungsvorrichtung, Funktionen der ersten Identifizierungseinrichtung (4), der zweiten Identifizierungseinrichtung (4), der dritten Identifizierungseinrichtung (4) und der Erkennungseinrichtung (5) der optischen Plattenvorrichtung nach Anspruch 18 auszuführen, wenn das Programm in der Informationsverarbeitungsvorrichtung installiert ist.

## Revendications

1. Procédé de reconnaissance de disque optique permettant de reconnaitre le type de disques optiques (1) chargés, **caractérisé par**
la détermination du fait qu'un disque optique (1) est un disque vierge conforme aux normes de téléchargement de DVD lorsqu'il a été détecté logiquement que le disque optique (1) est un DVD-ROM sur la base d'informations relatives au disque écrites dans une zone d'amorce du disque optique (1), et qu'il a également été déterminé que le suivi du sillon échoue à la suite d'une application d'une instruction de mode lecture sur une zone de données du disque optique (1), et qu'il a également été déterminé qu'aucun signal d'erreur de suivi de sillon n'a été détecté à la suite de la réalisation de la focalisation sur la zone de données.

2. Procédé de reconnaissance de disque optique selon la revendication 1, **caractérisé en ce que**, lorsqu'un signal d'erreur de suivi de sillon présentant une amplitude prédéterminée ou supérieure n'est pas détecté dans la zone de données, il peut être déterminé qu'il ne se trouve aucune donnée enregistrée dans la zone de données.

3. Procédé de reconnaissance de disque optique selon la revendication 1, **caractérisé en ce que**, lorsqu'il est commandé pour réaliser un suivi du sillon sur la zone de données mais que le suivi du sillon échoue, il peut être déterminé qu'il ne se trouve aucune donnée enregistrée dans la zone de donnée.

4. Procédé de reconnaissance de disque optique selon l'une quelconque des revendications 1 à 3, **caractérisé en ce que** la détection logique du fait qu'il s'agit d'un DVD-ROM peut être réalisée sur la base d'un Book Type (type de livre) écrit dans la zone de données de commande de la zone d'amorce du disque optique.

5. Dispositif à disque optique destiné à enregistrer des informations sur un disque optique (1) chargé et/ou à les restituer, **caractérisé en ce qu'**il comprend :
un premier organe d'identification (4) qui identifie logiquement que le disque optique est un DVD-ROM sur la base d'informations écrites dans une zone d'amorce du disque optique (1) ;
un deuxième organe d'identification (4) qui identifie qu'il ne se trouve aucune donnée enregistrée, en lisant les données à partir d'un emplacement de départ de données situé dans une zone de données du disque optique (1) ; et
un organe de reconnaissance (5) qui détermine que le disque optique (1) est un disque vierge conforme aux normes de téléchargement de DVD, sur la base d'une sortie en provenance du premier organe d'identification (4) indiquant que le disque optique est logiquement un DVD-ROM et d'une sortie en provenance du deuxième organe d'identification (4) indiquant qu'il ne se trouve aucune donnée enregistrée dans la zone de données.

6. Dispositif à disque optique selon la revendication 5, **caractérisé en ce que** lorsqu'un signal d'erreur de suivi de sillon présentant une amplitude prédéterminée ou supérieure ne peut pas être détecté, le deuxième organe d'identification (4) peut déterminer qu'il ne se trouve aucune donnée enregistrée dans la zone de donnée.

7. Dispositif à disque optique selon la revendication 5, **caractérisé en ce que**, lorsqu'il est commandé pour réaliser un suivi du sillon sur la zone de données mais que le suivi du sillon échoue, le deuxième organe d'identification (4) peut déterminer qu'il ne se trouve aucune donnée enregistrée dans la zone de donnée.

8. Dispositif à disque optique selon l'une quelconque des revendications 5 à 7, **caractérisé en ce que** l'identification logique du fait qu'il s'agit d'un DVD-ROM peut être réalisée sur la base d'un Book Type (type de livre) écrit dans la zone de données de commande de la zone d'amorce du disque optique (1).

9. Programme permettant d'amener un dispositif de traitement d'informations à mettre en oeuvre les fonctions du premier organe d'identification (4), du deuxième organe d'identification (4), et de l'organe de reconnaissance (5) selon les revendications 5 à 8, lorsque le programme est installé dans le dispositif de traitement d'informations.

10. Procédé de reconnaissance de disque optique selon la revendication 1, **caractérisé en ce que**, parmi des sections de la zone de données du disque optique (1), une section d'adresse de départ peut être soumise à la focalisation.

11. Procédé de reconnaissance de disque optique selon la revendication 1, **caractérisé en ce que** l'opération de suivi de sillon est effectuée selon un déplacement dans la direction radiale du disque optique (1).

12. Dispositif à disque optique destiné à enregistrer des informations sur un disque optique (1) chargé et/ou à les restituer, **caractérisé en ce qu'**il comprend :
un premier organe d'identification (4) qui identifie logiquement que le disque optique est un DVD-ROM sur la base d'informations relatives au disque écrites dans une zone d'amorce du disque optique (1) ;
un organe de commande de suivi de sillon (4) qui effectue une commande visant à la réalisation du suivi du sillon sur une zone de données du disque optique (1), et, s'il est déterminé que le suivi du sillon échoue, émet une indication que le suivi du sillon a échoué ;
un deuxième organe d'identification (4) qui détermine s'il se trouve avec ou sans signal d'erreur de suivi de sillon en réalisant une focalisation sur la zone de données du disque optique (1) en réaction à la sortie en provenance de l'organe de commande de suivi de sillon (4) indiquant que le suivi du sillon a échoué ; et
un organe de reconnaissance (5) qui détermine que le disque optique (1) est un disque vierge conforme aux normes de téléchargement de DVD, sur la base d'une sortie en provenance du premier organe d'identification (4) indiquant logiquement que le disque optique (1) est un DVD-ROM et de la sortie en provenance du deuxième organe d'identification (4) indiquant l'absence de signal d'erreur de suivi de sillon.

13. Dispositif à disque optique selon la revendication 12, **caractérisé en ce que**, parmi des sections de la zone de données du disque optique (1), une section d'adresse de départ est soumise à la focalisation.

14. Dispositif à disque optique selon la revendication 12, **caractérisé en ce que** l'organe de commande de suivi de sillon (4) effectue une commande visant à la réalisation du suivi du sillon sur le disque optique (1) selon un déplacement effectué dans la direction radiale de celui-ci.

15. Programme permettant d'amener un dispositif de traitement d'informations à mettre en oeuvre les fonctions du premier organe d'identification (4), de l'organe de commande de suivi de sillon (4), du deuxième organe d'identification (4), et de l'organe de reconnaissance (5) du dispositif à disque optique selon la revendication 12 ou 13 lorsque le programme est installé dans le dispositif de traitement d'informations.

16. Procédé de reconnaissance de disque optique selon la revendication 1, **caractérisé par** la détermination du fait que le disque optique (1) est un disque vierge conforme aux normes de téléchargement de DVD, si aucun signal d'erreur de suivi de sillon n'est détecté dans la zone de données, suivie de la détection d'un signal vobulé, et s'il est également reconnu qu'un sillon d'ondulation est présent sur le disque optique (1).

17. Procédé de reconnaissance de disque optique selon la revendication 16, **caractérisé en ce que**
si aucun signal d'erreur de suivi de sillon n'est détecté dans la zone de données selon un procédé de détection de phase différentielle, une approche de détection push-pull peut être appliquée pour détecter un signal vobulé.

18. Dispositif à disque optique selon la revendication 12, **caractérisé en ce qu'**il comprend :
un troisième organe d'identification (4) qui détecte un signal vobulé dans la zone de données selon une approche de détection push-pull lorsque le deuxième organe d'identification (4) ne détecte aucun signal d'erreur de suivi de sillon ; et **caractérisé en ce que** l'organe de reconnaissance (5) reconnait que le disque optique (1) est un disque vierge conforme aux normes de téléchargement de DVD lorsque le troisième organe d'identification (4) détecte le signal vobulé.

19. Programme permettant d'amener un dispositif de traitement d'informations à mettre en oeuvre les fonctions du premier organe d'identification (4), du deuxième organe d'identification (4), du troisième organe d'identification (4), et de l'organe de reconnaissance (5) du dispositif à disque optique selon la revendication 18 lorsque le programme est installé dans le dispositif de traitement d'informations.
